# EUROPÄISCHE PATENTSCHRIFT

(11) **EP 0 579 700 B1**
(45) Veröffentlichungstag und Bekanntmachung des Hinweises auf die Patenterteilung: **15.11.1995**
(21) Anmeldenummer: 92908808.6
(22) Anmeldetag: 01.04.1992
(51) Int. Cl.: A61C 17/06

(54) **ABSCHEIDER ZUR TRENNUNG EINES FESTSTOFF-FLÜSSIGKEITSGEMISCHES**
SEPARATOR FOR LIQUID/SOLID MIXTURES
SEPARATEUR POUR MELANGE LIQUIDE-SOLIDE

(30) Priorität: 12.04.1991 AT 776/91
(43) Veröffentlichungstag der Anmeldung: 26.01.1994
(73) Patentinhaber: Trawöger, Werner, 6173 Oberperfuss (AT); PREGENZER, Bruno, 6173 Oberperfuss (AT)
(72) Erfinder: Trawöger, Werner, 6173 Oberperfuss (AT); PREGENZER, Bruno, 6173 Oberperfuss (AT)
(74) Vertreter: Torggler, Paul, Dr.
(86) Internationale Anmeldenummer: AT9200042
(87) Internationale Veröffentlichungsnummer: WO9218061

(56) Entgegenhaltungen:
- EP-A- 0 300 439
- WO-A-89/04641
- METASYS 'multi system type 1' 27. November 1989 , METASYS , INNSBRUCK

## Beschreibung

Die Erfindung betrifft einen Abscheider zur Trennung eines Feststoff-Flüssigkeitsgemisches, insbesondere von dentalem Abwasser, mit einem Einlaß für das zu trennende Gemisch, mit einem Auslaß für die abgetrennte Flüssigkeit, mit einem abnehmbar angeordneten Absetzbehälter für die Feststoffe, mit mindestens einem bewegbaren Verriegelungselement, das in der Offenstellung die Abnahme des Absetzbehälters ermöglicht und in der Schließstellung den Absetzbehälter am Abscheider fixiert, und mit einer Sensoreinrichtung zur Erkennung zumindest einer vorgegebenen Füllhöhe. Der Abscheider ist weiters vorzugsweise mit einem eine lichtdurchlässige Wandung aufweisenden Absetzbehälter und mit einer Sensoreinrichtung, die zumindest eine Lichtschranke aufweist, versehen.

Ein derartiger Abscheider ist beispielsweise dem Technikerhandbuch zum Amalgamabscheider "Metasys Multisystem Typ 1", Mai 1990, der Fa. Metasys Produktionsgesellschaft m.b.H. & Co. KG, Innsbruck, zu entnehmen. Der Abscheider weist eine Halterung für einen Absetzbehälter auf, an der auch eine gedruckte Schaltung fixiert ist, die sich parallel zum Absetzbehälter erstreckt. Von dieser steht die Sensoreinrichtung ab, die bei montiertem Absetzbehälter zuerst 95 % der Füllhöhe und dann deren Maximum erkennt. Zur Fixierung des Absetzbehälters am Abscheider sind einen Totpunkt überwindende Schnellverschlüsse vorgesehen. Die Anbringung der Sensoreinrichtung an der Platine erfordert deren relativ ungeschützte Anordnung und die Erfindung hat es sich zur Aufgabe gestellt, einen Abscheider zu schaffen, bei dem dieser Nachteil nicht mehr gegeben ist.

Erfindungsgemäß wird dies dadurch erreicht, daß die Sensoreinrichtung am bewegbaren Verriegelungselement angeordnet ist.

Durch die Anordnung der Sensoreinrichtung am Verriegelungselement ist diese von der Platine räumlich getrennt, deren Unterbringung somit wesentlich geschützter erfolgen kann. Es erübrigt sich weiters eine eigene Halterung für die Sensoreinrichtung, da das Verriegelungselement ohnedies den Absetzbehälter zumindest teilweise übergreifen muß. Die Sensoreinrichtung ist, da sie an der dem Absetzbehälter zugekehrten Seite des Verriegelungselementes vorgesehen werden muß, durch dieses nach außen abgedeckt, und somit ebenfalls geschützt angeordnet.

In einer bevorzugten Ausbildung, in der der Absetzbehälter eine lichtdurchlässige Wandung, und mindestens eine Lichtschranke als Sensoreinrichtung aufweist, ist vorgesehen, daß das Verriegelungselement als Schwenkbügel ausgebildet ist, der beidseitig des Absetzbehälters angelenkte Schwenkarme aufweist, und daß die Sensorelemente jeder Lichtschranke an sich senkrecht zur Schwenkachse erstreckenden Teilen des Schwenkbügels angeordnet ist.

Da es für eine möglichst störungsfreie Erkennung der Füllhöhe günstiger ist, nur einen Teilbereich des Absetzbehälters zu überwachen, ist dieser bevorzugt mit einer aus einer Seitenwand vorstehenden Rippe versehen, die von der Sensoreinrichtung umgreifbar ist. Erfindungsgemäß weist dann vorzugsweise der Schwenkbügel einen die Schwenkarme verbindenden Quersteg auf, von dem parallel zu den Schwenkarmen Laschen abstehen, die sich in der Schließstellung beidseitig der Rippe erstrecken und an denen die Sensorelemente angeordnet sind.

Insbesondere in diesem Fall können auch weitere Sensorelemente am Schwenkbügel vorgesehen sein, die beispielsweise jene Flüssigkeitsstände im Absetzbehälter erkennen, bei denen eine die Flüssigkeit entfernende Pumpe ein- und ausgeschaltet wird.

Nachstehend wird nun die Erfindung an Hand der Figuren der beiliegenden Zeichnungen näher beschrieben ohne darauf beschränkt zu sein.

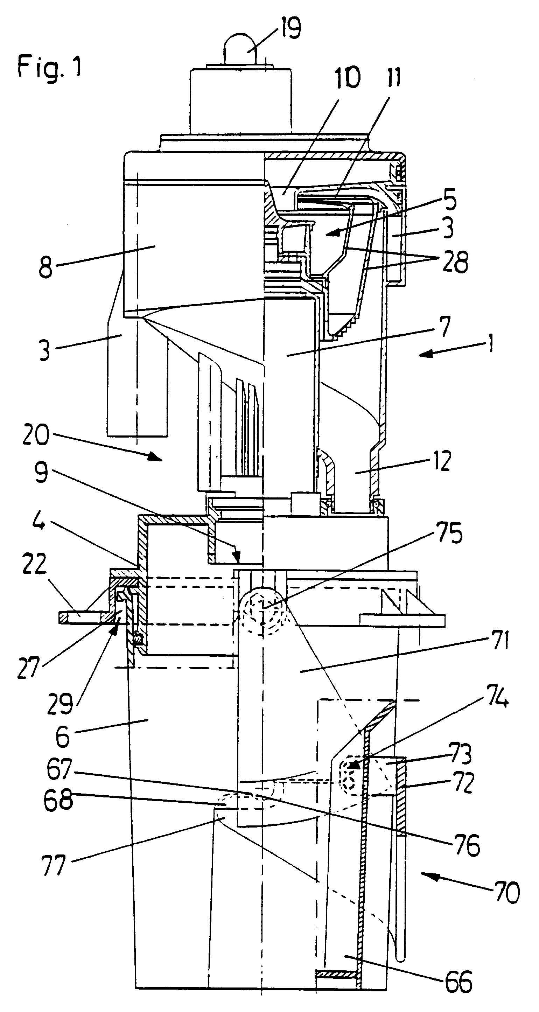

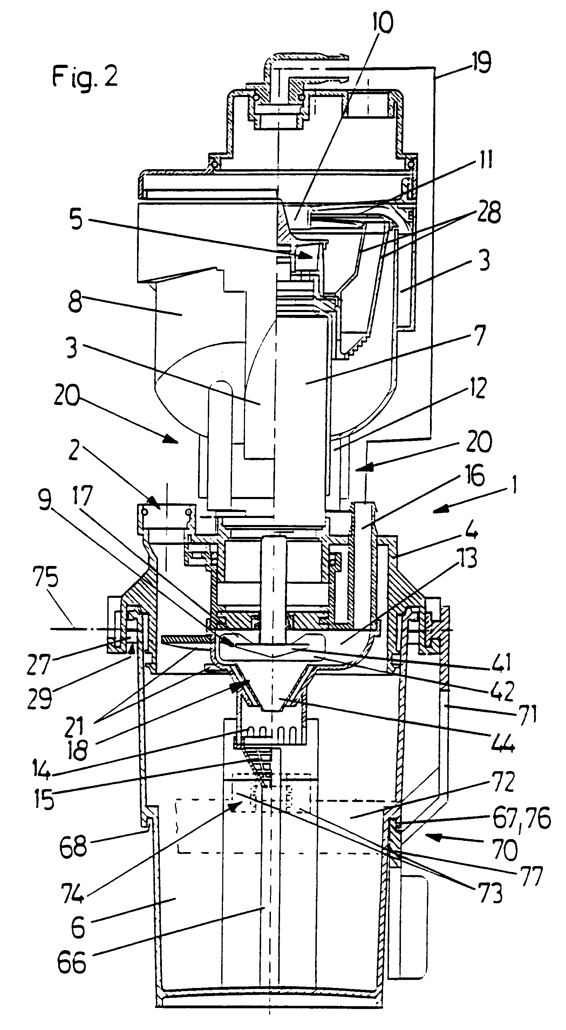

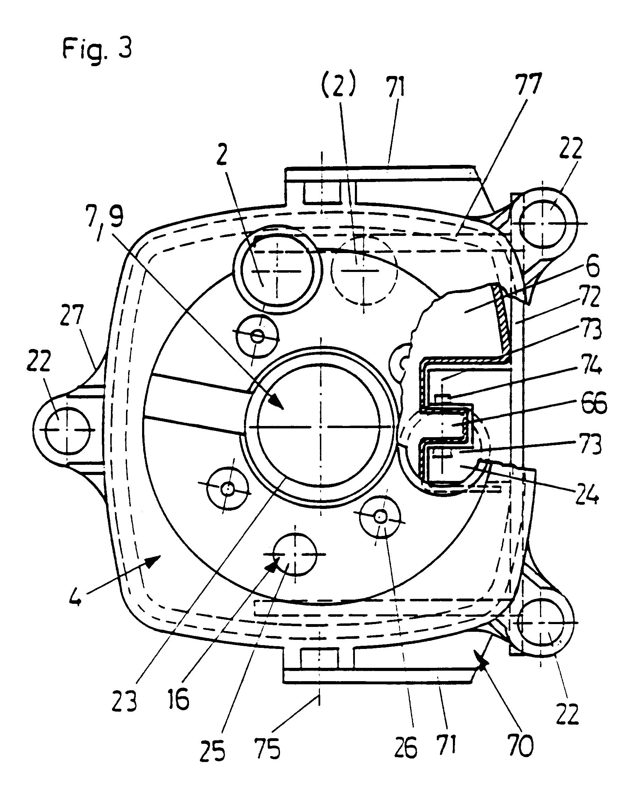

Die Fig. 1 und 2 zeigen Vertikalschnitte durch einen erfindungsgemäßen Abscheider und die Fig. 3 eine Draufsicht auf einen Montagegrundkörper des Abscheiders.

Der Abscheider 1 setzt sich aus einem Absetzbehälter 6 zur Sedimentation von Feststoffen und einer in Durchflußrichtung an den Absetzbehälter 6 anschließenden Vollmantelzentrifuge 5 zusammen. Beide sind an einem Montagegrundkörper 4 angeordnet, der an einem zahnärztlichen Stuhl od. dgl. befestigbar ist, wobei der Absetzbehälter 6, wie aus den Fig. 3 und 4 näher ersichtlich ist, vom Montagegrundkörper 4 nach unten abnehmbar gehalten ist. Der Montagegrundkörper 4 ist mit Befestigungsbohrungen 22 versehen, die insbesondere an einem eigenen Adapterteil 27 vorgesehen sind. Je nach den gegebenen Einbauverhältnissen sind dann entsprechende Adapterteile 27 vorhanden, mit denen der Montagegrundkörper 4 versehen werden kann. Weitere Durchtrittsöffnungen sind im Montagegrundkörper 4 ausgebildet: eine Öffnung 23 zur Aufnahme des Motors 7 der Zentrifuge 5 und einer Pumpe 9, eine Öffnung 24 zum Einsetzen des Feststoffablaufes 12 der Zentrifuge 5, eine Öffnung 25 zur Durchführung einer nur schematisch gezeigten Verbindungsleitung 19 zwischen der Pumpe 9 und der Zentrifuge 5, Öffnungen 26 für Befestigungsschrauben zur gemeinsamen Fixierung des Zentrifugengehäuses 8 und des Pumpengehäuses 13, sowie der Gemischeinlaß 2, durch den das von der Luftabscheidevorrichtung und/oder eine Speischale kommende Gemisch in den Abscheider 1 eingebracht wird. Wie angedeutet, kann auch ein zweiter Gemischeinlaß (2) vorgesehen sein, sodaß jede Zuleitung an einen eigenen Gemischeinlaß 2, (2) angesetzt werden kann. Das auf dem Montagegrundkörper 4 fixierte Zentrifugengehäuse 8 ist im unteren Teil verjüngt, wobei der Motor 7 zentral angeordnet ist, und enthält darüber zwei ineinander angeordnete Zentrifugenbehälter 28 der Vollmantelzentrifuge 5. In den inneren Zentrifugenbehälter 28 mündet der Einlaß 10 für das von der Pumpe 9 über die Verbindungsleitung 19 aus dem Absetzbehälter 6 hochgeförderte Gemisch und der äußere Zentrifugenbehälter 28 weist eine Übertrittsöffnung 11 auf, über die gereinigte Flüssigkeit in den Flüssigkeitsauslaß 3 gelangt. Feststoffe fließen mit Restflüssigkeit bei Stillstand der Zentrifuge 5 aufgrund der Schwerkraft nach unten und gelangen über den exzentrisch angeordneten Feststoffablauf 12 durch die Öffnung 24 in den Absetzbehälter 6. In den Gemischeinlaß 2, (2) des Montagegrundkörpers 4 ist drehbar ein nicht gezeigtes Winkelanschlußstück eingesetzt. Sowohl der Gemischeinlaß 2, (2) als auch die Öffnung 25 für die Verbindungsleitung 19 liegen in der durch die Verjüngung des Zentrifugengehäuses 8 bedingten Aussparung 20, also innerhalb des von der Zentrifuge 5 benötigten Raumes, sodaß eine äußerst kompakte, platzsparende Ausführung gegeben ist.

Eine nach unten offene Nut 29 des Montagegrundkörpers 4 dient dem Einschub des Absetzbehälters 6. Dieser ist mittels eines bügelförmigen Verriegelungselementes 70 fixiert, das um eine Achse 75 an der Außenwand der Nut 29 schwenkbar gelagert ist. Das Verriegelungselement 70 weist zwei seitlich außerhalb des Absetzbehälters 6 sich erstreckende Schwenkarme 71 und einen diese verbindenden Quersteg 72 auf. Jedem Schwenkarm 71 ist ein dazu parallel verlaufender Steg 77 zugeordnet, der in der Schließstellung in eine Tasche 68 des Absetzbehälters 6 eingreift. Eine an zumindest einem Steg 77 vorgesehene Rastausnehmung 76 verrastet an einer Nocke 67 in der Tasche 68 des Absetzbehälters 6. Der Absetzbehälter 6 ist aus lichtdurchlässigem Kunststoff gefertigt und weist an seiner zum Quersteg 72 weisenden Wandung eine vorstehende Längsrippe 66 auf. Der Quersteg 72 ist mit parallel zu den Seitenwänden der Längsrippe 66 abstehenden Laschen 73 versehen, an denen eine Sensoreinrichtung 74 ausgebildet ist. Diese umfaßt zumindestens eine, im gezeigten Ausführungsbeispiel, zwei Lichtschranken, wobei jeder Lichtstrahl die Längsrippe 66 durchdringt und der Messung der Sedimentationshöhe der Feststoffe dient. Die untere Lichtschranke reagiert bei 95 % der maximalen Füllhöhe durch ein Warnsignal, während bei Ansprechen der zweiten, die maximale Füllhöhe anzeigenden oberen Lichtschranke der Abscheider, vorzugsweise die gesamte Absauganlage, außer Betrieb gesetzt wird. Für den Wechsel des Absetzbehälters wird das Verriegelungselement 70 hochgeschwenkt, sodaß die Stege 77 den Absetzbehälter 6 freigeben, der dann nach unten abgenommen werden kann. Die Sensoreinrichtung 74 könnte noch weitere Sensorelemente umfassen, die beispielsweise jene beiden Niveaus der sich über den Feststoffen sammelnden Flüssigkeit erfassen, an denen der Motor 7 ein- und ausgeschaltet wird.

## Patentansprüche

1. Abscheider zur Trennung eines Feststoff-Flüssigkeitsgemisches, insbesondere von dentalem Abwasser, mit einem Einlaß (2) für das zu trennende Gemisch, mit einem Auslaß (3) für die abgetrennte Flüssigkeit, mit einem abnehmbar angeordneten Absetzbehälter (6) für die Feststoffe, mit mindestens einem bewegbaren Verriegelungselement (70), das in der Offenstellung die Abnahme des Absetzbehälters (6) ermöglicht und in der Schließstellung den Absetzbehälter (6) am Abscheider (1) fixiert, und mit einer Sensoreinrichtung (74) zur Erkennung zumindest einer vorgegebenen Füllhöhe des Absetzbehälters (6), dadurch gekennzeichnet, daß die Sensoreinrichtung (74) am bewegbaren Verriegelungselement (70) angeordnet ist.

2. Abscheider nach Anspruch 1, mit einem eine lichtdurchlässige Wandung aufweisenden Absetzbehälter (6), und mit einer Sensoreinrichtung (74), die zumindest eine Lichtschranke aufweist, dadurch gekennzeichnet, daß das Verriegelungselement (79) als Schwenkbügel ausgebildet ist, der beidseitig des Absetzbehälters (6) angelenkte Schwenkarme (71) aufweist, und daß die Sensorelemente jeder Lichtschranke an sich senkrecht zur Schwenkachse (75) erstreckenden Teilen des Schwenkbügels angeordnet sind.

3. Abscheider nach Anspruch 2, an dessen Wandung eine umgreifbare Rippe (66) vorgesehen ist, die von der Lichtschranke durchdringbar ist, dadurch gekennzeichnet, daß der Schwenkbügel einen die Schwenkarme (71) verbindenden Quersteg (72) aufweist, von dem parallel zu den Schwenkarmen (71) Laschen (73) abstehen, die sich in der Schließstellung beidseitig der Rippe (66) erstrecken.

## Claims

1. Separator for separating a solid-liquid mixture, in particular of dental waste water, with an inlet (2) for the mixture that is to be separated, with an outlet (3) for the separated liquid, with a removable settling tank (6) for the solids, with at least one movable locking element (70) which, in the open position, permits removal of the settling tank (6), and in the closed positition locks the settling tank (6) to the separator (1), and with a sensing system (74) to identify at least one pre-set level of liquid in the settling tank (6), characterized in that the sensor system (74) is arranged on the movable locking element (70).

2. Separator as defined in claim 1, with a settling tank (6) that incorporates a light-permeable wall, and with a sensor system (74) that incorporates at least one light barrier, characterized in that the locking element (79) is configured in the form of a pivoting bale that incorporates pivot arms (71) that are hinged on both sides of the settling tank (6), and in that the sensor elements of each light barrier are arranged on parts of the pivoting bale that extend perpendicular to the pivot axis (75).

3. Separator as defined in claim 2, on the walls of which there is provided an embraceable rib (66) which can be penetrated by the light barrier, characterized in that the pivot bale incorporates a cross-piece (72) that connects the pivot arms (71), from which tabs (73) project parallel to the pivot arms (71) and extend on both sides of the rib (66) when in the closed position.

## Revendications

1. Séparateur pour la séparation d'un mélange substances solides-liquide, en particulier d'eaux usées dentaires, comportant un orifice d'entrée (2) pour le mélange à séparer, un orifice de sortie (3) pour le liquide séparé, un récipient de décantation amovible (6) pour les substances solides, au moins un élément de verrouillage mobile (70) qui permet d'enlever le récipient de décantation (6), en position ouverte, et qui fixe celui-ci au séparateur (1), en position fermée, et un dispositif détecteur (74) destiné à détecter au moins une hauteur de remplissage prédéfinie du récipient de décantation (6), caractérisé en ce que le dispositif détecteur (74) est disposé au niveau de l'élément de verrouillage mobile (70).

2. Séparateur selon la revendication 1, pourvu d'un récipient de décantation (6) à paroi translucide et d'un dispositif détecteur (74) qui comporte au moins une barrière photo-électrique, caractérisé en ce que l'élément de verrouillage (70) est conçu comme une bride pivotante qui comporte des bras pivotants (71) articulés des deux côtés du récipient de décantation (6), et en ce que les éléments détecteurs de chaque barrière photo-électrique sont disposés sur des parties de la bride pivotante perpendiculaires au pivot (75).

3. Séparateur selon la revendication 2, sur la paroi duquel est prévue une nervure apte à être entourée (66) qui est apte à être traversée par la barrière photo-électrique, caractérisé en ce que la bride pivotante comporte une branche transversale (72) reliant les bras pivotants (71), à partir de laquelle des pattes (73) font saillie parallèlement aux bras pivotants (71), lesquelles pattes (73) s'étendent des deux côtés de la nervure (66), en position fermée.
